# EUROPÄISCHE PATENTSCHRIFT

(11) **EP 3 453 813 B1**
(45) Veröffentlichungstag und Bekanntmachung des Hinweises auf die Patenterteilung: **07.07.2021**
(21) Anmeldenummer: 17190287.7
(22) Anmeldetag: 11.09.2017
(51) Int. Cl.: E04F 11/18

(54) **HANDLAUFINSTALLATION MIT NOTBELEUCHTUNG**
HANDRAIL INSTALLATION WITH EMERGENCY LIGHTING
INSTALLATION DE LA MAIN COURANTE POURVUE DE LUMIÈRE D'URGENCE

(43) Veröffentlichungstag der Anmeldung: 13.03.2019
(73) Patentinhaber: Woertz Engineering AG, 4132 Muttenz (CH)
(72) Erfinder: ONODI, Tamas, 8800 Thalwil (CH); DREIER, Andreas, 4208 Nunningen (CH); BUSER, Yannick, Magstatt-le-Haut (FR)
(74) Vertreter: Samson & Partner Patentanwälte mbB

(56) Entgegenhaltungen:
- EP-A1- 2 927 912
- GB-A- 2 426 259
- US-A- 3 569 689
- US-A- 4 161 769
- US-A- 4 394 718
- Marcel Schöb: "Sicherheitsbeleuchtung in Tunnels", , 31. Mai 2015 (2015-05-31), XP055448098, Gefunden im Internet: URL:https://www.elektrotechnik.ch/fileadmi n/elektrotechnik.ch/documents/PDF/ET_5_201 5_Gotthard.pdf [gefunden am 2015-05-31]
- LED - Lighting & Electronic Design: "Hand Rail Lite Series", , 31. Dezember 2009 (2009-12-31), XP002778954, Gefunden im Internet: URL:http://ledlinc.com/aisleStepPDF/HandRa ilSeries.pdf [gefunden am 2009-12-31]

## Beschreibung

### GEBIET DER ERFINDUNG

Die Erfindung betrifft eine Handlaufinstallation mit Notbeleuchtung.

### HINTERGRUND DER ERFINDUNG

Das HandRailSystem HRS-LaneLED-GFK der Firma Gifas Electric zeigt einen mit seinem Kabelkanal integral geformten Handlauf, bei dem Rundkabel in einer Schiene an der Unterseite des den Handlauf tragenden Teils verlaufen und eine in dieser Schiene befestigte LED-lane speisen.

Marcel Schöb: "Sicherheitsbeleuchtung in Tunnels", 31. Mai 2015 (2015-05-31), XP055448098, URL:https://www.elektrotechnik.ch/fileadmin/elektrotechnik.ch/documents/PDF/ET_5_2015_G otthard.pdf betrifft eine Vorschrift, gemäß derer Bahntunneln mit einem Handlauf ausgestattet werden sollen. Es wird dort auch spezifiziert, dass ein Funktionserhalt gemäß E90 gewährleistet werden muss. Außerdem werden dort Ergebnisse von Brandschutzversuchen erläutert. Gemäß diesen Versuchen konnten selbst Markenprodukte im Zusammenspiel die vorgeschriebene Dauer von 90 Minuten Funktionserhalt nicht leisten. Es wird ein Handlaufsystem vorgestellt, bei dem der Handlauf mit Glasfaser verstärkt ist und die Kabel auf Haltepunkten aus Edelstahl aufliegen, selbst wenn der Handlauf komplett abgebrannt wäre. Die Kabeltrasse ist an der Unterseite eines Handlaufs in eine mit dem Handlauf einstückig verbundene Schiene eingebettet, welche einen Schutzbügel zum Halten der Kabel umfasst. Außerdem ist an dem Handlauf eine Lichtleiste mit LED's angebracht. Außerdem wird ein System zur Alarmauslösung und Alarmquittierung beschrieben, welche alle 100m auch eine Einschaltmöglichkeit der Tunnelorientierungsbeleuchtung beinhaltet. Diese Alarmierungseinrichtungen sind oberhalb des Handlaufs montiert. Die beschrieben Vorrichtung erfüllt den geforderten E90 Funktionserhalt.

EP 2 927 912 A1 stellt ein Flachkabel mit Kurzschlussvermeidung im Brandfall auch bei Verlegung auf einem elektrisch leitenden Tragkörper bereit. Das Flachkabel umfasst wenigstens zwei Adern, einen Zwischenmantel, wenigstens eine feuerbeständige Isolierschicht und einen Außenmantel. Die wenigstens zwei Adern verlaufen parallel nebeneinander in einer Ebene. Die Adern weisen jeweils einen Aderleiter und eine im Querschnitt ringförmige Aderisolierung auf, wobei bei wenigstens einer der Adern die Aderisolierung unmittelbar auf den Aderleiter extrudiertes, im Brandfall kermasierendes Isoliermaterial umfasst. Der Zwischenmantel umschließt die Adern insgesamt und umhüllt dabei die Aderisolierung unmittelbar an deren Außenseite. Der Zwischenmantel greift zwischen jeweils zwei Adern von einer Flachseite des Flachkabels zur anderen Flachseite durch. Der Außenmantel umgibt den Zwischenmantel und definiert die Außenkontur des Flachkabels. Zwischen dem Zwischenmantel und dem Außenmantel ist wenigstens eine feuerbeständige Isolierschicht angeordnet.

US 4,394,718 betrifft eine Handlaufanordnung für die eine Licht emittierende Montagehalterung vorgesehen ist. Die Halterung umfasst einen Körperabschnitt, der den Handlauf oder eine zugehörige Wand trägt und der einen Hohlraum aufweist, der eine lichtemittierende Quelle enthält und den Zugang zu den zugehörigen Wandbefestigungen ermöglicht. Eine transluzente Linse ist keilförmig und bündig auf der Halterung montiert, so dass der Eindruck entsteht, dass die Linse darin eingegossen ist, wodurch ein sauberes Profil entsteht. GB2426259A offenbart einen Handlauf zur Verwendung in Treppen und Korridore, der Handlauf inklusive Notbeleuchtungssystem.

### KURZFASSUNG DER ERFINDUNG

Ein erster Aspekt der Erfindung betrifft eine Handlaufinstallation mit Notbeleuchtung für Tunnel, welche einen Handlauf, einen geschlossenen Kabelkanal, ein in dem geschlossenen Kabelkanals verlegtes Flachkabel und mehrere Abzweigdosen zur abisolierfreien Kontaktierung des Flachkabels umfasst. Die Abzweigdosen kontaktieren das Flachkabel innerhalb des geschlossenen Kabelkanals. Der Handlauf und der Kabelkanal Liegen auf voneinander verschiedenen Auflageflächen an der Oberseite von mehreren Tragekörpern auf, und der Handlauf ist dabei separat von dem geschlossenen Kabelkanal bzw. den Tragekörpern vorgesehen und der Kabelkanal ist separat von den Tragekörpern vorgesehen, wobei der Handlauf oberhalb des geschlossenen Kabelkanals angeordnet ist. Die Notbeleuchtung umfasst mehrere hintereinander angeordnete Lampen, die an den Abzweigdosen platziert sind und von diesen gespeist werden. Die Lampen sind in Richtung Tunnelboden durch übereinanderliegende Montageöffnungen im Boden des Kabelkanals durchgesteckt, sodass sie in einen Bereich unterhalb des geschlossenen Kabelkanals abstrahlen. Der Handlauf und der Kabelkanal werden durch die Tragekörper horizontal entlang einer Tunnelwand geführt. Der geschlossene Kabelkanal und die Tragekörper sind aus feuerfesten Metall hergestellt und sowohl das Flachkabel als auch die Abzweigdosen sind brandfest ausgestaltet.

Ein weiterer Aspekt betrifft einen Installationssatz für eine Handlaufinstallation mit Notbeleuchtung wobei der Installationssatz einen Handlauf mit Notbeleuchtung einen geschlossenen Kabelkanal, ein Flachkabel zur Verlegung im geschlossenen Kabelkanal in dessen Längsrichtung mehrere Abzweigdosen zur abisolierfreien Kontaktierung des Flachkabels, wobei der Kabelkanal auch zur Aufnahme der Abzweigdosen vorgesehen ist und diskrete Tragkörper mit voneinander verschiedenen Auflageflächen für den Handlauf und den Kabelkanal umfasst. Dabei bildet der Handlauf ein vom Kabelkanal gesondertes Bauteil und ist zur Anordnung oberhalb des geschlossenen Kabelkanals ausgebildet. Der Installationssatz für eine Handlaufinstallation mit Notbeleuchtung umfasst außerdem mehrere Lampen zur Anordnung in Längsrichtung der Handlaufinstallation mit Notbeleuchtung hintereinander, wobei im Boden des Kabelkanals Öffnungen zum Durchstecken der Lampen für Abstrahlung weg vom Kabelkanalboden ausgebildet sind und wobei der geschlossene Kabelkanal und die Tragekörper aus Metall hergestellt sind.

### ALLGEMEINE ERLÄUTERUNG, AUCH BETREFFEND FAKULTATIVE AUSGESTALTUNGEN DER ERFINDUNG

Ein Aspekt der Erfindung betrifft eine Handlaufinstallation mit Notbeleuchtung für Tunnel. Handlaufinstallationen in Tunneln, wie z.B. Eisenbahntunneln, sollen Menschen im Falle eines Unglücks in einem Tunnel aus dem Tunnel oder doch zumindest zum nächsten Sicherheitsstollen führen. Diese Führung ist notwendig, da Passagiere nach beispielsweise einem Zugunglück zwar dem Verlauf des Zugs im Tunnel folgen können, spätestens aber nachdem sie das Ende des Zuges erreicht haben die Orientierung verlieren können. Durch die Notbeleuchtung wird der Weg entlang dessen die Passagiere geführt werden ausgeleuchtet, was ein sicheres gehen, ohne beispielsweise über nach einem Unglück herumliegende Trümmer zu laufen ermöglicht.

Die Handlaufinstallation mit Notbeleuchtung umfasst dabei einen Handlauf, einen geschlossener Kabelkanal, sowie wenigstens ein entlang des geschlossenen Kabelkanals verlegtes Flachkabel. Die Verwendung eines Flachkabels, also eines Kabels mit parallel verlaufenden Kabeladern, bei Sicherheitsinstallationen wie der hier beschriebenen Handlaufinstallation mit Notbeleuchtung erhöht die Ausfallsicherheit des Kabels. Die miteinander verdrillten Adern von Rundkabeln, nämlich, können bei bereits abgeschmolzener Kabelisolierung durch herabstürzende Teile leicht aneinander gepresst werden, was zu einem Kurzschluss führt. Bei brandfest ausgeführten Flachkabel sind die parallelen Adern in einen feuerfesten, isolierenden und bei brandtypischen Temperaturen keramisierenden Kabelmantel eingepackt, wodurch sie sich auch bei hohen Temperaturen nicht berühren.

Die Handlaufinstallation mit Notbeleuchtung umfasst außerdem mehrere Abzweigdosen zur abisolierfreien Kontaktierung des wenigstens einen Flachkabels, wobei die Abzweigdosen das wenigstens eine Flachkabel innerhalb des geschlossenen Kabelkanals kontaktieren. Abisolierfrei ist dabei so zu verstehen, dass das Kabel nicht aufgeschnitten werden muss, um einen elektrischen Kontakt herzustellen sondern Kontaktdornen oder Kontaktmesser in den Kabelmantel bis zu den Kabeladern vordringen und diese kontaktieren, ohne dass dafür die Isolierschicht der Kabeladern entfernt werden müsste. Die Abzweigdosen kontaktieren das Flachkabel direkt im Kabelkanal, dieser muss also breiter als das Flachkabel selbst ausgestaltet sein, um sowohl die Abzweigdosen als auch das durch diese kontaktierte Flachkabel zu fassen.

Die Notbeleuchtung umfasst mehrere hintereinander angeordnete Lampen, die an den Abzweigdosen platziert sind und von diesen gespeist werden. Die Lampen sind in Richtung Tunnelboden durch übereinanderliegende Montageöffnungen im Boden des Kabelkanals durchgesteckt, sodass sie in einen Bereich unterhalb des geschlossenen Kabelkanals abstrahlen. Da die Lampen direkt im Kabelkanal und direkt an den Abzweigdosen platziert sind, ist es nicht notwendig die Lampen über längere Abzweigleitungen oder dergleichen mit Energie zu versorgen. Sie können vielmehr unmittelbar über die Abzweigdosen durch kurze Stichleitungen bzw. an den Abzweigdosen eventuell vorhandenen Direktanschlüssen mit Energie versorgt werden.

Auch die Anschlussleitungen von den Abzweigdosen zu den Lampen sind innerhalb des Kabelkanals verstaut, wodurch sich eine sehr kompakte Anordnung ergibt und die Installation der Lampen erleichtert wird. Die Lampen müssen lediglich in Montageöffnungen im Boden des Kabelkanals eingeklinkt und an die jeweilig nächstliegende Abzweigdose angeschlossen werden. Die Lampen sind in Richtung Tunnelboden durch Montageöffnungen im Boden des Kabelkanals durchgesteckt. Dadurch wird auch die Positionierung der Lampen hintereinander in gewissen Abständen (z.B. ein Meter zwischen den Lampen, zwei Meter zwischen den Lampen etc.) erleichtert, da sie nur in bereits vorhandenen Montagelöcher montiert werden müssen.

Auch wenn die Lampen um gleichzeitig im Kabelkanal angeschlossen zu sein aber den Raum unterhalb des Kabelkanals auszuleuchten, durch Montageöffnungen im Kabelkanal gesteckt werden müssen, ist der Kabelkanal im Betrieb stets verschlossen. Die durch die Montageöffnungen gesteckten Lampen verschließen im durchgesteckten Zustand diese Öffnungen nämlich vollständig.

Die Verwendung von einzelnen hintereinander angeordneten Lampen erhöht im Vergleich zur Verwendung als ganzer montierter Lichterketten die Austauschbarkeit, da einzelne defekte Lampen leicht ausgetauscht werden können.

Der Handlauf und der Kabelkanal liegen auf Auflageflächen an der Oberseite mehrerer Tragekörper auf, wobei der Handlauf dabei separat von dem geschlossenen Kabelkanal bzw. der Tragekörper vorgesehen ist und der Kabelkanal separat von den Tragekörpern vorgesehen ist und der Handlauf oberhalb des geschlossenen Kabelkanals angeordnet ist.

Um den Handlauf und den Kabelkanal an der Tunnelwand in einer Höhe zu befestigen, sodass Passagiere den Handlauf leicht umfassen können, sind die Tragekörper in einer solchen Höhe an der Tunnelwand befestigt, dass die gewünschte Höhe des Handlaufs erreicht wird.

Grundsätzlich umfasst die Handlaufinstallation mit Notbeleuchtung mehrere voneinander getrennte Einzelkomponenten:
Dies sind zum einen die an der Wand befestigten Tragekörper, die auf an ihnen vorgesehenen Auflageflächen in einer ersten Höhe den geschlossenen Kabelkanal tragen und beispielsweise über den Seitenwänden der Tragekörper die sich an die Auflageflächen für den Kabelkanal anschließen zweite Auflageflächen aufweisen, die in einer zweiten Höhe den Handlauf tragen.

Der Handlauf ist dabei ebenso als ein separates Element ausgebildet, beispielsweise als durch die Auflagefläche entlang der Tunnelwand geführtes Halterohr. Der Handlauf kann beispielsweise aus glasfaserverstärktem Kunststoff hergestellt sein. Der Handlauf ist beispielsweise so weit über dem Kabelkanal platziert, dass man eine Hand um den Handlauf legen kann ohne dabei den weiter darunterliegenden Kabelkanal zu berühren. Der Kabelkanal ist beispielsweise an den Auflageflächen für den Kabelkanal der Tragekörper fixiert und zwar zwischen der Seitenwand der Tragekörper und der Tunnelwand. Somit ist sichergestellt, dass der Kabelkanal dem Verlauf der Tunnelwand folgt.

Der Handlauf und der Kabelkanal werden durch die diskreten Tragekörper horizontal entlang einer Tunnelwand geführt. Der geschlossene Kabelkanal und die Tragekörper sind aus Metall hergestellt. Dadurch erhöht sich die Brandsicherheit der gesamten Handlaufinstallation mit Notbeleuchtung. Durch den metallenen, geschlossenen Kabelkanal kann ein Feuer nur schwer ins Innere des Kabelkanals zu dem Flachkabel bzw. den Abzweigdosen vordringen.

In manchen Ausgestaltungen sind sowohl das Flachkabel als auch die Abzweigdosen brandfest ausgestaltet.

Selbst wenn jedoch auf diese Komponenten brandtypische Temperaturen (über 150°C) einwirken sind diese darauf ausgelegt, dass im inneren der Komponenten kein Kurzschluss entsteht bzw. auch kein Kurzschluss über den metallenen Kabelkanal selbst.

Dazu sind elektrisch leitfähige Teile in den Abzweigbuchsen typischerweise durch feuerfeste Keramik voneinander isoliert gehalten. Beim Flachkabel wird dasselbe beispielsweise durch einen - oben erwähnten- feuerfesten Kabelmantel oder dadurch dass die Kabeladern samt keramisierender Isolierschicht auf einem feuerfesten Glimmerband aufliegen, das auch bei Abschmelzen der äußeren Kabelhülle zwischen den Kabeladern und dem metallischen Kabelkanal liegt, erreicht.

Die Abzweigbuchsen sind gegen Eindringen von Staub bzw. Wasser durch ein Kunststoffgehäuse und Dichtungen an den Öffnungen geschützt. Auch wenn der Kabelkanal geschlossen ist, könnte beispielsweise an einer Öffnung die zu einem Deckel für den Kabelkanal passt, Wasser (Fließwasser, Spritzwasser) oder Staub in den Kabelkanal vordringen. Um einen Kurzschluss im Bereich der Abzweigdose durch Eindringen von Wasser im Bereich der Abzweigdosen zu verhindern, sind diese mit wasserdichten Kunststoffgehäusen versehen bzw. mit Dichtungen im Bereich ihrer Öffnungen ausgestattet. Je nach verwendetem Kunststoff bzw. der verwendeten Dichtungen (Gummidichtung, Labyrinthdichtung) kann ein Eindringschutz bis hin zur Klasse IP68 erreicht werden.

Die Lampen sind einzeln oder in Gruppen gegen Überstrom und/oder brandtypische Temperaturen abgesichert. Durch diese Absicherung kann ein Kurzschluss, der an einer Lampe der Notbeleuchtung entsteht nicht auf die komplette elektrische Installation samt Flachkabel als Durchgangsleitung durchschlagen. Der Kurzschluss wird entweder direkt über den durch ihn ausgelösten Überstrom detektiert und es wird durch die Überstromsicherung die elektrische Verbindung zwischen Flachkabel und der/den abgesicherten Lampe(n) getrennt. Bei einer Sicherung, die bei brandtypischen Temperaturen auslöst, werden die Lampen eventuell schon getrennt bevor tatsächlich ein Kurzschluss in der/den Lampe(n) vorliegt, dieser aber durch die brandtypische Temperatur praktisch unmittelbar bevorsteht.

Es können entweder nur Überstromsicherungen oder nur durch brandtypische Temperaturen auslösbare Sicherungen vorgesehen sein, aber auch eine Kombination aus beiden Sicherungstypen. Die Sicherung kann beispielsweise direkt in der Abzweigdose platziert sein, oder elektrisch zwischen Abzweigdose und Lampe(n). Es kann eine Sicherung für eine Lampe vorgesehen sein oder einer Sicherung für mehrere (z.B. 10, 20 oder 30) Lampen - bei Platzierung der Sicherung innerhalb der Abzweigdosen ist dann entsprechend für jede Lampe eine Abzweigdose oder eine Abzweigdose für entsprechend mehrere Lampen vorgesehen.

In manchen Ausgestaltungen sind die Lampen in ein Lampengehäuse eingesetzt und umfassen ein Leuchtmittel, wobei das Lampengehäuse aus wasserdichtem Material besteht und die Lampe vor Eindringen von Staub bzw. Wasser geschützt ist. Das Lampengehäuse ist dabei abgeschlossen.

Die Lampen sind beispielsweise mit einem Lampengehäuse ausgestattet, das in dem Kabelkanal beispielsweise unmittelbar neben einer Abzweigdose eingehängt wird und dabei in einem Zug mit der Abzweigdose elektrisch verbunden wird. Dadurch wird eine schnelle Montage der Lampen ermöglicht und eine kompakte Anordnung geschaffen, bei der die Lampen nicht zuerst außerhalb des Kabelkanals befestigt und dann erst zu einer Durchgangsleitung im Kabelkanal verbunden werden müssen.

Die elektrischen Anschlüsse der Lampe befinden sich typischerweise an dem Lampengehäuse innerhalb des Kabelkanals, die im Lampengehäuse gehaltene Lampe ist durch Montagelöcher im Boden des Kabelkanals gesteckt. An dem Ende des Lampengehäuses das sich im Kabelkanal befindet kann eine Haltevorrichtung (beispielsweise eine Aufhängung) für die Lampe vorgesehen sein, welche die Lampe in einer bestimmten Position hält. Die Lampen können direkt an die Abzweigdose angeschlossen sein - oder durch Stichleitungen mit dieser verbunden sein.

Die Lampengehäuse und die Lampen sind beispielsweise aus wasserdichtem Kunststoff gefertigt und sind mit mehreren Dichtungen, beispielsweise am Sitz des Leuchtmittels bzw. im Bereich der Linse(n) ausgestattet um insgesamt eine Dichtheit gegenüber Staub und Wasser bis zur Klasse IP68 zu erreichen. Durch die Dichtheit des Lampengehäuse bzw. der Lampen insgesamt, werden Funktionsausfälle der Lampen durch Eindringen von Wasser oder Staub verhindert. Zusätzlich können die Lampen über eine eigene Kühlung zur weiteren Erhöhung der Ausfallsicherheit verfügen. Die Kühlung mildert die Erwärmung der Lampe, insbesondere des Leuchtmittels der Lampe (z.B. LED), beispielsweise bei einem Brand ab und erhöht so die Funktionsdauer der Lampe bei brandtypischen Temperaturen bzw. auch bei Normaltemperatur.

In manchen Ausgestaltungen sind die Leuchtmittel entweder schräg nach unten ausgerichtet, oder vertikal nach unten ausgerichtet und das von dem Leuchtmittel emittierte Licht wird von einer Ablenkvorrichtung in Richtung schräg unten abgelenkt.

In dieser Ausgestaltung wird der Bereich unterhalb des Handlaufs bzw. des Kabelkanals schräg unterhalb des Kabelkanals bzw. des Handlaufs ausgeleuchtet. Der Lichtkegel der Lampen schließt in dieser Ausgestaltung typischerweise in einem Winkel zwischen dem Kabelkanal und der Tunnelwand an der die Handlaufinstallation mit Notbeleuchtung montiert ist, ein. Typischerweise ist der Winkel so gewählt, dass die Lampen schräg nach unten in Richtung Tunnelmitte abstrahlen. Es wird so der Boden neben bzw. unter dem Handlauf entlang des Handlaufs ausgeleuchtet, wodurch die Flucht entlang des Handlaufs für Passagiere erleichtert wird. Hindernisse im Bereich des Fluchtwegs entlang des Handlaufs sind so gut sichtbar.

Der Lichtkegel in den Bereich schräg unterhalb des Handlaufs bzw. Kabelkanals kann als erste Möglichkeit entweder dadurch erzeugt werden, dass die Lampen so in schräg in dem Kabelkanal montiert werden und durch eine Montageöffnung im Kabelkanal geführt werden, dass das Leuchtmittel schräg nach unten in diesen Bereich hinein ausgerichtet sind.

Als zweite Möglichkeit, werden die Lampen zwar vertikal in dem Kabelkanal montiert bzw. auch senkrecht durch die Montageöffnungen im Boden des Kabelkanals geführt, und auch die Leuchtmittel sind somit vertikal nach unten ausgerichtet. Jedoch ist eine Ablenkvorrichtung, beispielsweise eine Linse nach dem Leuchtmittel vorgesehen, die den Lichtkegel in den Bereich schräg unter den Handlauf bzw. den Kabelkanal ablenkt.

In manchen Ausgestaltungen sind die Lampen so ausgestaltet, dass sie den Bereich unter dem Kabelkanal bzw. Handlauf linienförmig ausleuchten. In dieser Ausgestaltung erstreckt sich im Bereich des Handlaufs kein Lichtkegel sondern es entsteht am Boden neben dem Handlauf eine mit Licht gezogene Linie, die den Passagieren auf der Flucht als zusätzliche Orientierungshilfe neben dem Handlauf dient. Die linienförmige Ausleuchtung kann dabei entweder über in einer Linie angeordnete LEDs mit schmalem Abstrahlkegel als Leuchtmittel erreicht werden oder es kann auch ein anderes Leuchtmittel verwendet werden, dessen ursprünglich breiterer Abstrahlkegel durch ein Linsensystem auf eine linienförmige Ausleuchtung hin fokussiert wird.

In manchen Ausgestaltungen beträgt der Abstand zwischen zwei Lampen der Notbeleuchtung zwischen 0,8 und 2 Meter. Durch einen solchen Abstand ist sichergestellt, dass Personen die den Lichtern entlang der Handlaufinstallation folgen stets bereits mehrere Lichter hintereinander sehen, was ebenso die Orientierung erleichtert da so bereits die Kontur des noch voran liegenden Weges erkennbar wird.

In manchen Ausgestaltungen sind das Tragekörper und der Kabelkanal aus massiven V2A- oder V4A Edelstahl gefertigt. Diese Wahl des Materials soll die Beständigkeit der Konstruktion gegenüber Hitze und Feuer sicherstellen, und zwar bis zu Temperaturen von 900°C. Mit einer Tragekonstruktion und einem Kabelkanal aus V2A bzw. V4A Edelstahl lässt sich auch ein Funktionserhalt erreichen (also ein Erhalt der Funktionsfähigkeit der gesamten Handlaufinstallation mit Notbeleuchtung für mindestens 30 Minuten) oder zumindest eine Funktionsfähigkeit für einige Minuten im Fall eines starken Brandes.

Die Verwendung eines solche Hitze- und feuerbeständigen Materials verhindert dass das innerhalb des Kabelkanals verlegte Flachkabel durch Verbiegen oder Schmelzen des Kabelkanals freigelegt wird bzw. die gesamte Handlaufinstallation durch hitzebedingte verminderte Tragfähigkeit des Tragekörper schlicht von der Tunnelwand abfällt.

V2A Edelstähle meint in dem Zusammenhang einen Chrom-Nickel Stahl mit wenigstens 13% Chromanteil. V2A Stahl wird derzeit unter der Werkstoffnummer 1.4301 geführt. V4A Stahl mein in dem Zusammenhang einen Chrom-Nickel Stahl mit Molybdänzusatz, der heute in den Ausführungen der Werkstoffnummer 1.4401, 1.4404 und 1.4571 geführt wird.

In manchen Ausgestaltungen weisen die Tragekörper wenigstens eine vertikale Stütze an der Auflagefläche für den Kabelkanal auf und können über die wenigstens eine vertikale Stütze mittels einer Gewindestange an der Wand befestigt werden.

Die Tragekörper sind beispielsweise über eine durch die vertikalen Stützen der Tragekörper geführte Gewindestangen an der Wand befestigt. Auch eine zweite vertikale Stütze pro Tragekörper die sich von der Auflagefläche des Kabelkanals vertikal nach unten weg erstreckt und parallel zu einer ersten vertikalen Stütze geführt wird, kann vorgesehen sein um die Gewindestange durch Muttern an den Außenseiten der ersten und zweiten vertikalen Stütze zu verankern. Das Gewinde der Gewindestange wird in die Wand geschraubt. Bei Tunnelwänden aus Beton wird dabei typischerweise ein in ein Loch in der Tunnelwand gesteckter Messingdübel zum Aufnehmen des Gewindes verwendet.

In manchen Ausgestaltungen ist der geschlossene Kabelkanal mittels eines Deckels nach oben hin verschlossen. Der geschlossene Kabelkanal umfasst dabei eine u-förmigen Kabelpritsche und einen darauf aufgesetzten Deckel. Das Flachkabel, die Abzweigdose und die Lampen sind dabei innerhalb der u-förmigen Kabelpritsche angeordnet - ebenso die Montagelöcher für die Lampen.

In manchen Ausgestaltungen bildet der Deckel im aufgesetzten Zustand mit der u-förmigen Kabelpritsche einen Labyrinthverschluss des Kabelkanals. Unter Labyrinthverschluss wird dabei jede Form von Verschluss verstanden die gegenüber Entweichen von Gasen bzw. Flüssigkeiten abdichtet, indem sie den Strömungsweg des Gases bzw. der Flüssigkeit um aus einem Gefäß (hier dem Kabelkanal bzw. der u-förmigen Schiene die diesen mit dem Deckel bildet) erhöht. Der Deckel ist genau wie die restlichen Bestandteile des geschlossenen Kabelkanals aus feuerfesten Edelstahl, beispielsweise der V2A, bzw. V4A gefertigt.

In manchen Ausgestaltungen umfassen das Flachkabel und/oder die Abzweigbuchse ein solches Material, dass bei dessen Verbrennung ein zur Unterdrückung von Brandentwicklung geeignetes Gas entsteht, welches durch die abgeschlossene Ausführung des geschlossenen Kabelkanals innerhalb des geschlossenen Kabelkanals gehalten wird.

Das Gehäuse der Abzweigbuchse bzw. des Flachkabels können beispielsweise Polypropylen (PP), Polyethylen (PE) oder andere thermoplastische Polymere umfassen. Bei der Verbrennung von PE oder PP entsteht im Wesentlichen Kohlendioxid und Wasser, wobei Kohlendioxid sich als Brandverzögerungsgas im obigen Sinne eignet, weil es Luftsauerstoff aus dem Kabelkanal verdrängt, und somit einer Brandentwicklung Feuer den Nährboden entzieht.

Durch den Einsatz solcher Materialien in dem geschlossenen Kabelkanal - bzw. überhaupt erst durch das Vorsehen eines geschlossenen Kabelkanals über einem Flachkabel das ohnehin ein Material umfasst, das bei seiner Verbrennung Kohlendioxid freigibt, kann eine Brandentwicklung im Bereich des Kabelkanals um bis zu 10 Minuten verzögert werden. Dadurch bleibt die Stromversorgung der Notbeleuchtung der Handlaufinstallation länger funktionsfähig, wodurch Menschenleben gerettet werden können.

In manchen Ausgestaltungen ist ein mit der Handlaufinstallation mit Notbeleuchtung verbundener Notfallschalter vorgesehen, mit dem die Notbeleuchtung aktiviert werden kann. Dieser Notfallschalter kann beispielsweise vom Zugpersonal eines in einem Eisenbahntunnel verunglückten Zuges betätigt werden, um die Notbeleuchtung beim Handlauf zu aktivieren. Typischerweise sind diese Notfallschalter selbst dauerhaft beleuchtet, damit der Schalter in der Dunkelheit eines Tunnels eben auch leicht gefunden werden kann.

Die Notbeleuchtung der Handlaufinstallation nur im tatsächlichen Notfall zu aktivieren spart einerseits Energie und erhöht die Lebensdauer des Systems, da die Lampen der Notbeleuchtung nur im Ernstfall aktiviert werden und so nicht durch ständige Beleuchtung des Handlaufsystems vorzeitig altern.

Die Handlaufinstallation mit Notbeleuchtung erstreckt sich beispielsweise über die gesamte Länge eines Tunnels und wird bei Querstollen, Tunnelpfeilern bzw. Kanten im Tunnelverlauf um Biegungen, Ecken und/oder Kanten der Tunnelwand geführt.

Die Handlaufinstallation mit Notbeleuchtung muss nicht bis ans Ende des Tunnels führen sondern es genügt, dass sie bis zum nächsten Rettungsstollen eines Tunnels reicht. Soll jedoch ein gewisser Querstollen angesteuert werden oder soll die Handlaufinstallation mit Notbeleuchtung doch bis zum Ende des Tunnels reichen, müssen dazwischenliegende Tunnelpfeiler oder Querstollen, die aus der Tunnelwand herausragen umgangen werden.

Dafür muss die Handlaufinstallation mit Notbeleuchtungen um Biegungen bis zu 90° bzw. um Ecken (abrupte Biegung um 90°) geführt werden. Dies wird erreicht indem die Tragekörper um Winkelteile ergänzt werden, welche die Handlaufinstallation mit Notbeleuchtung um die Biegung bzw. Ecke führen. Auch der geschlossene Kabelkanal bzw. der Handlauf muss von der Konstruktion her an die Ecke bzw. Biegung angepasst sein, indem beispielsweise Eckteile verwendet werden.

In manchen Ausgestaltungen ist der Handlauf an den Auflageflächen für den Handlauf der Tragekörper durch Schrauben fixiert und der Kabelkanal ist an den Auflageflächen für den Kabelkanal der Tragekörper durch Schrauben fixiert. Dadurch werden beide Komponenten gegenüber verrutschen aus ihrer Führung gesichert. Insbesondere ein als Kunststoffrohr ausgestalteter Handlauf könnte sonst von in Panik geratenen Passagieren leicht heruntergerissen werden.

Ein weiterer Aspekt betrifft einen Installationssatz für eine Handlaufinstallation mit Notbeleuchtung wobei der Installationssatz einen Handlauf mit Notbeleuchtung einen geschlossenen Kabelkanal, ein Flachkabel zur Verlegung im geschlossenen Kabelkanal in dessen Längsrichtung mehrere Abzweigdosen zur abisolierfreien Kontaktierung des Flachkabels, wobei der Kabelkanal auch zur Aufnahme der Abzweigdosen vorgesehen ist und diskrete Tragkörper mit voneinander verschiedenen Auflageflächen für den Handlauf und den Kabelkanal umfasst. Dabei bildet der Handlauf ein vom Kabelkanal gesondertes Bauteil und ist zur Anordnung oberhalb des geschlossenen Kabelkanals ausgebildet. Der Installationssatz für eine Handlaufinstallation mit Notbeleuchtung umfasst außerdem mehrere Lampen zur Anordnung in Längsrichtung der Handlaufinstallation hintereinander, wobei im Boden des Kabelkanals Öffnungen zum Durchstecken der Lampen für Abstrahlung weg vom Kabelkanalboden ausgebildet sind und wobei der geschlossene Kabelkanal und die Tragekörper aus Metall hergestellt sind.

### KURZE BESCHREIBUNG DER ZEICHNUNG

In der Zeichnung zeigen:
- Fig. 1 eine Seitenschnittansicht der Handlaufinstallation mit Notbeleuchtung mit schräg nach unten durchgesteckten Lampen
- Fig. 2 eine Seitenschnittansicht der des Handlaufinstallation mit Notbeleuchtung mit gerade nach unten durchgesteckten Lampen und einer Linse zum Ablenken des Lichts in Richtung schräg nach unten
- Fig. 3 eine schematische Seitenansicht der Handlaufinstallation mit Notbeleuchtung
- Fig. 4 eine Seitenansicht der Handlaufinstallation mit Notbeleuchtung mit einem zu dieser verbundenen Notfallsehalter
- Fig. 5 eine schematische Darstellung einer um zwei Biegungen geführter Handlaufinstallation mit Notbeleuchtung

Die Zeichnung und die Beschreibung der Zeichnung beziehen sich auf Beispiele der Erfindung und nicht auf die Erfindung selbst.

### BESCHREIBUNG VON AUSFÜHRUNGSBEISPIELEN ANHAND DER ZEICHNUNG

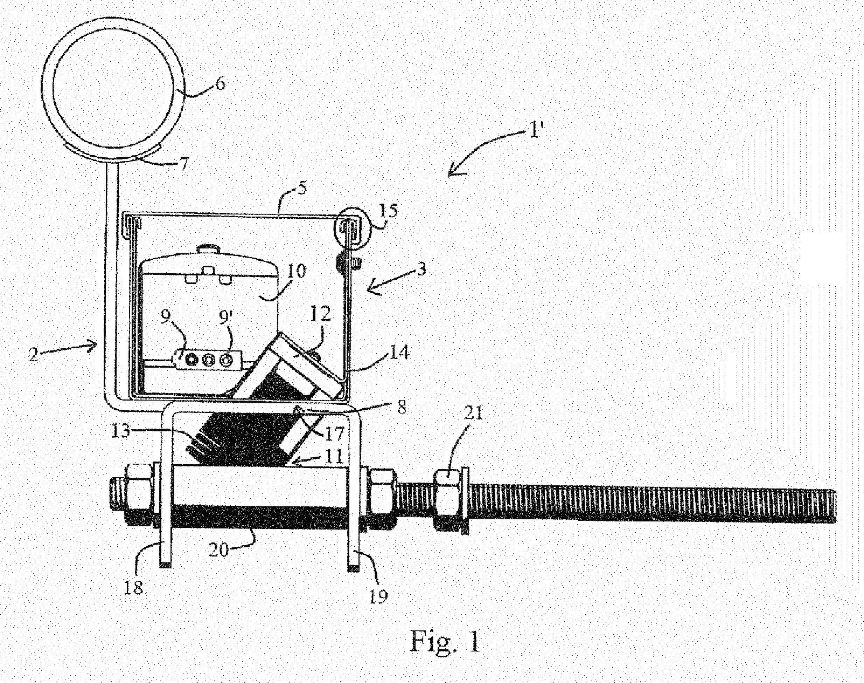

Die Handlaufinstallation mit Notbeleuchtung 1 gemäß **Fig.1** umfasst als Hauptbestandteile mehrere Tragekörper 2, einen geschlossenen Kabelkanal 3, ein entlang des geschlossenen Kabelkanals 3 verlaufendes Flachkabel 9, mehrere Abzweigdosen 10 welche das Flachkabel 9 kontaktieren, mehrere in dem geschlossenen Kabelkanal 3 montierte Lampen 11 und schließlich den Handlauf 6. Die Handlaufinstallation mit Notbeleuchtung 1 ist in Fig. 1 in einem Querschnitt durch eine Stelle gezeigt, an der der geschlossene Kabelkanal 3 auf einem Tragekörper 2 aufliegt.

Der geschlossene Kabelkanal 3 wird dabei durch eine u-förmige Kabelpritsche 4 und einen darauf aufgesetzten Deckel 5 gebildet. Die oberen Enden der u-förmigen Kabelpritsche 4 auf die der Deckel 5 aufgesetzt wird und der Deckel 5 selbst sind dabei so ausgestaltet, dass sie einen Labyrinthverschluss 15 des Kabelkanals bilden. Durch den Labyrinthverschluss 15 wird der Strömungsweg für aus dem Kabelkanal austretenden Gase so weit erhöht, dass sich ein abdichtender Effekt gegenüber diesen Gasen ergibt.

Der Kabelkanal liegt an der Oberseite mehrerer Tragekörpers 2 auf einer an diesen gebildeten Auflagefläche für den Kabelkanal 8 auf. Die Tragekörper 2 haben eine Seitenwand 22 welche den geschlossenen Kabelkanal 3 in einer Position zwischen Tunnelwand und den Seitenwänden der Tragekörper 22 halten. Die Tragekörper 2 selbst sind ja über jeweils zwei vertikale Stützen 18, 19 und eine über Muttern 21 fixierte Gewindestangen 20 an der Tunnelwand befestigt.

Die Seitenwände der Tragekörper 22 weisen an seiner Oberseite eine Auflagefläche für den Handlauf 7 auf, durch die der Handlauf 6 entlang der Tunnelwand geführt wird. Der Handlauf 6 ist als ein Rohr aus Glasfaserverstärktem Kunststoff ausgestaltet.

Die Adern 9' des in dem geschlossenen Kabelkanal 3 verlaufenden Flachkabels 9 werden von den im Kabelkanal 3 befindlichen Abzweigdosen 10 abisolierfrei kontaktiert. Dies erfolgt beispielsweise über Kontaktmesser (nicht dargestellt) im inneren der Abzweigdosen 10. Die Abzweigdosen 10 stellen dabei eine elektrische Verbindung zwischen der dem speisenden Flachkabel 9, und der Notbeleuchtung, gegeben durch die Lampen 11, her. Die Notbeleuchtung, der Handlauf 6 und das Flachkabel 9 erstrecken sich dabei entlang der Tunnelwand in horizontaler Richtung entweder entlang des gesamten Tunnels oder von beliebigen Startpunkt weg wenigstens bis zu einem Rettungsstollen oder dergleichen.

Die Notbeleuchtung wird durch Lampen 11 gebildet. Die Lampen 11 sind alle 0,8 bis 2 Meter vorgesehen. Die Lampen 11 in der Ausführungsform gemäß Fig. 1 sind direkt an die Abzweigdose 10 angeschlossen und sind daher direkt an dieser platziert. Die Lampe 11 sind dabei in Lampengehäuse 12 eingesetzt, welches über eine Aufhängungen 14 in dem geschlossenen Kabelkanal 3 montiert sind. Die Lampen 11 sind dabei schräg durch Montageöffnungen im Boden des Kabelkanals 17 geführt, so dass sie den Bereich schräg unterhalb des geschlossenen Kabelkanals 3 bzw. der Tragekörper 2 ausleuchten. Das eigentliche Leuchtmittel der Lampen 11 sind dabei LEDs 13, welche an der durch die Montageöffnung 17 geführten Spitze der Lampe platziert sind. Die Lampen 11 selbst sind somit über das Lampengehäuse 12 innerhalb des Kabelkanals montiert, während die LEDs 13 an den Spitzen der Lampen 11 sich bereits außerhalb des Kabelkanals befinden.

Die kompakte Anordnung von Abzweigdosen 10 mitsamt dazu verbundenen Lampen 11 direkt in dem geschlossenen Kabelkanal 3 in durch Montageöffnungen für die Lampen 17 vorgegebenen Positionen ermöglicht eine besonders einfache Montage der Lampen 11. Insbesondere ist die Position der Lampen durch die Montageöffnungen 17 festgelegt und es müssen keine langen Verbindungsleitungen zwischen Abzweigdose 10 und Lampe 11 verlegt werden.

Die Abzweigdose 10 und das Flachkabel 9 sind auf Funktionserhalt im Brandfall ausgelegt. Das Flachkabel 9 weist eine keramisierende Aderisolierung auf, während elektrisch leitfähige Teile in der Abzweigdose 10 von keramischen Teilen auch im Brandfall elektrisch voneinander isoliert gehalten werden. Die Lampen 11 dagegen sind nicht brandfest ausgestaltet, jedoch ist die elektrische Verbindung zwischen den Lampen und der Abzweigdose durch eine Sicherung pro Lampe oder eine Sicherung für 10 bis 20 Lampen, die durch brandtypische Temperaturen und/oder Überstrom auslösbar ist, abgesichert.

Die Außenhülle des Flachkabels 9 bzw. das Gehäuse der Abzweigdose 10 sind aus einem Kunststoff gefertigt, der im Brandfall Kohlendioxid freisetzt, welches innerhalb des geschlossenen Kabelkanals 3 als eine Art Schutzgas fungiert. Das Kohlendioxid verdrängt Sauerstoff und entweicht selbst nicht oder nur in geringen Mengen aus dem geschlossenen Kabelkanal 3. Dadurch kann ein Übergreifen des Brandes auf die Lampe, das Flachkabel und die Abzweigdose verzögert werden.

Der abgeschlossene Kabelkanal (also Kabelpritsche und Deckel), sowie die Tragekörper 2 als auch die Gewindestange 20 und Muttern 21 sind aus feuerfesten Edelstahl der Güteklasse V2A oder V4A gefertigt, sodass sie einem Brand mit Temperaturen von bis zu 900°C gewährleisten.

Die Lampengehäuse 12, die Lampen 11 bzw. die Abzweigdosen sind mit einer Kunststoffaußenhülle und Gummidichtungen an ihren Öffnungen versehen. Sie erfüllen so einen Eindringschutz gegenüber Staub und Wasser bis hin zu IP68.

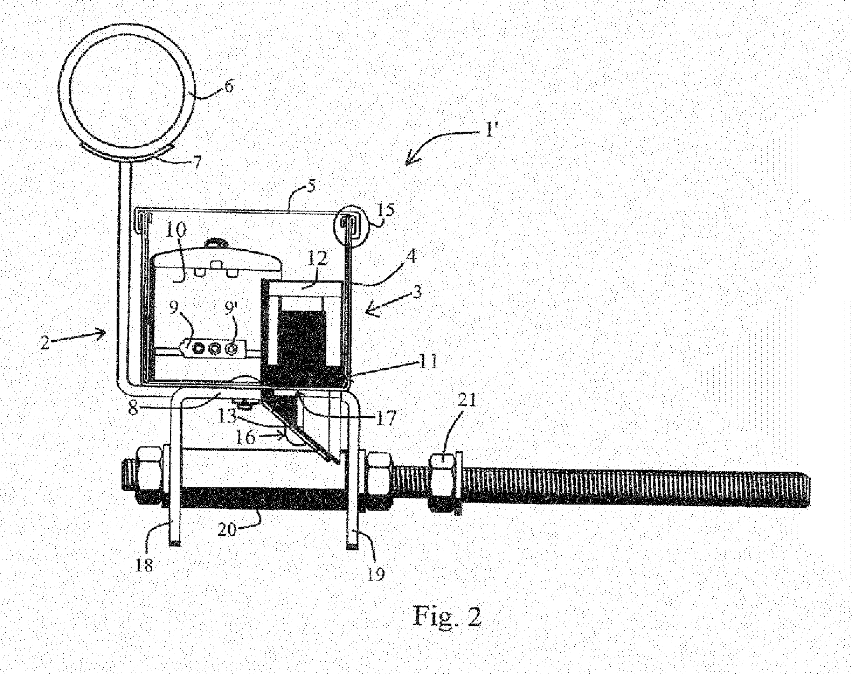

Die Handlaufinstallation mit Notbeleuchtung 1', in **Fig. 2** in einem Querschnitt vergleichbar dem von Fig. 1 gezeigt, entspricht im Wesentlichen der Handlaufinstallation mit Notbeleuchtung aus Fig. 1.

Der Unterschied zu der in Fig. 1 dargestellten Ausführungsform besteht darin, dass die Lampen 11, sowie die Lampengehäuse 12 in dem geschlossenen Kabelkanal 3 vertikal nach unten und nicht schräg nach unten wie in Fig. 1 orientiert sind. Ebenso sind die Lampen 11 nicht schräg nach unten durch die Montageöffnung im Boden des geschlossenen Kabelkanals 3 geführt sondern sie sind gerade nach unten (in Richtung Tunnelboden) hin ausgerichtet.

Dennoch leuchten die an der Spitze der Lampen 11 befindlichen LEDs 13 den Bereich seitlich unterhalb des geschlossenen Kabelkanals 3 bzw. der Tragekörper 2 aus. Dies wird dadurch bewerkstelligt, dass das Licht der LEDs 13 über Linsen 16 in diese Richtung abgelenkt wird.

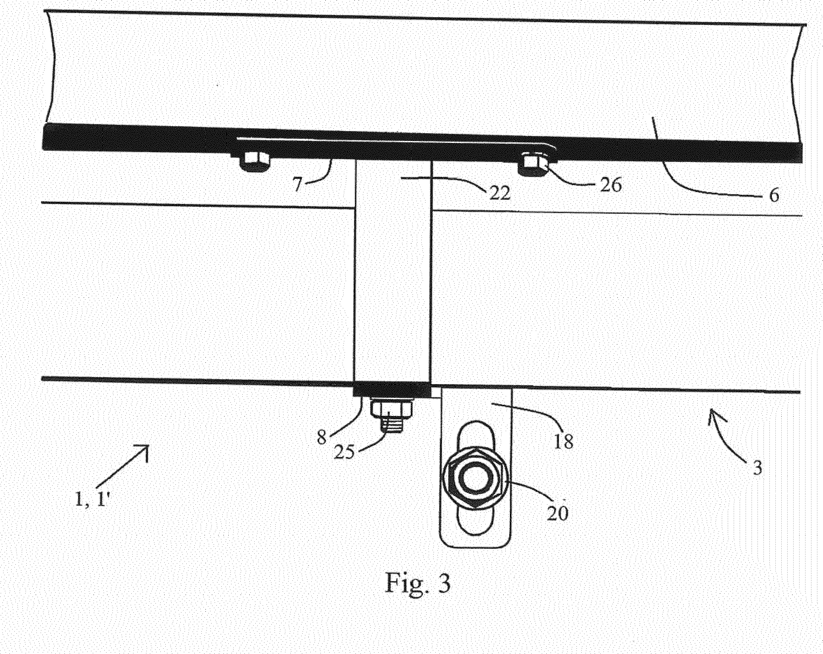

Die Handlaufinstallation mit Notbeleuchtung ist in **Fig. 3** in einer Seitenansicht von der Tunnelmitte aus dargestellt. Der Handlauf 6 ist dabei auf einer Auflagefläche für den Handlauf 7 mittels Schrauben befestigt. Die Auflagefläche für den Handlauf schließt sich an die Seitenwand des dargestellten Tragekörpers 22 an. Der geschlossene Kabelkanal 3 wiederum liegt auf der Auflagefläche für den Kabelkanal 8 auf und ist durch die Seitenwand des Tragekörpers 22 gegenüber ein verrutschen in Richtung Tunnelmitte hin gesichert. Der Tragekörper 2 selbst ist wiederum über die durch Muttern 21 fixierte Gewindestange 20 in der Wand befestigt. In Fig. 3 ist perspektivisch nur die Stelle gezeigt, an der die Gewindestange durch die weiter in Richtung Tunnelmittel liegende erste vertikale Stütze 18 des Tragekörpers 2 geführt ist. Wie durch die vertikalen Pfeile angedeutet, kann die vertikale Position der Gewindestange und somit die Montagehöhe der Handlaufinstallation mit Notbeleuchtung 1, 1' eingestellt werden.

Der Handlauf 6 ist durch Schrauben 26 an der Auflagefläche für den Handlauf 7 fixiert, sodass er nicht verrutschen kann. Ebenso der Kabelkanal ist mit der Auflagefläche für den Kabelkanal 8 mittels einer Schraube 25 fixiert.

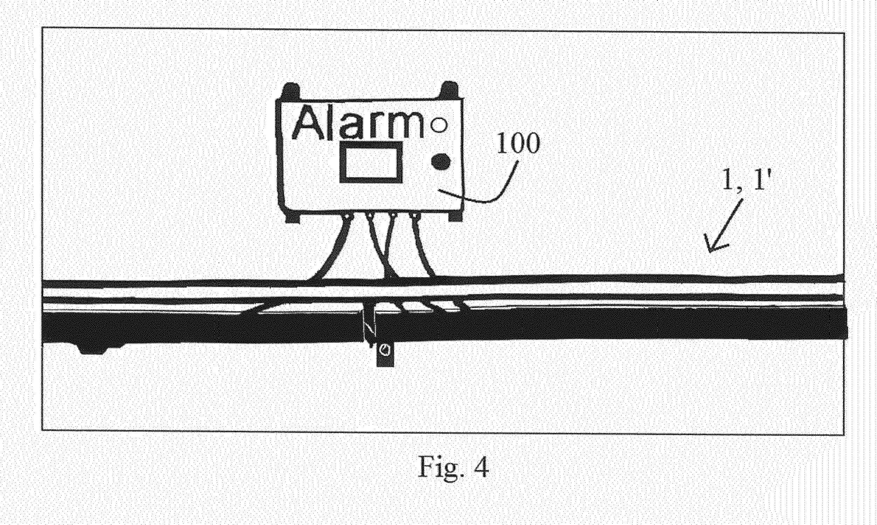

Ein Notfallschalter 100 ist zu der Handlaufinstallation mit Notbeleuchtung 1, 1' verbunden, wie in **Fig. 4** dargestellt. Wird der Notfallschalter 100 beispielsweise durch Zugpersonal oder Personal eines sonstigen Fahrzeugs, das durch den Tunnel fährt, betätigt, wird die Notbeleuchtung aktiviert. Der Raum seitlich neben dem Handlauf 6 bzw. unter dem Handlauf 6 wird dann von den Lampen 11 der Notbeleuchtung linienförmig ausgeleuchtet, sodass sich Passagiere entlang des Handlaufs 6 in Sicherheit bringen können.

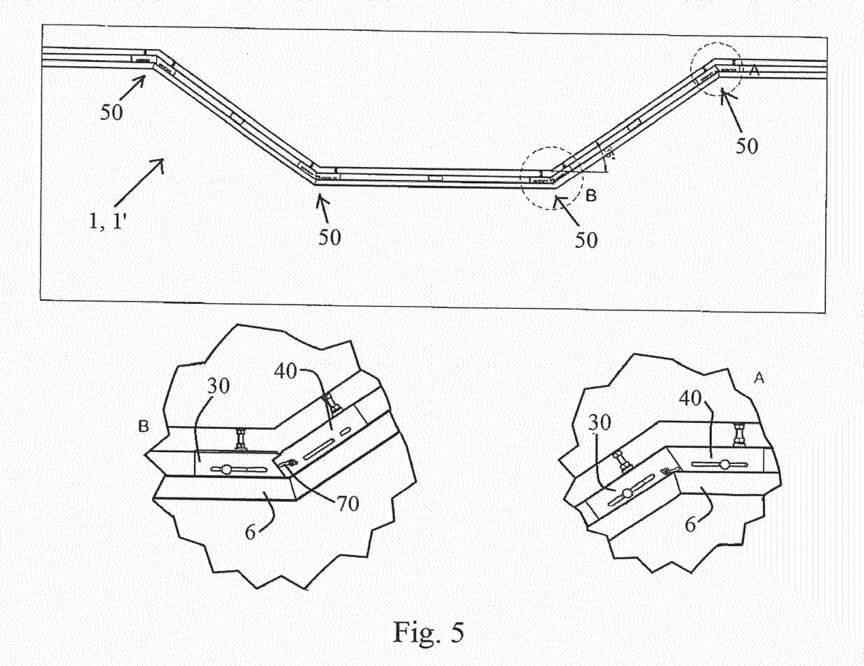

Eine um vier Kanten 50 eines Tunnels geführte Handlaufinstallation mit Notbeleuchtung 1, 1', ist schematisch in Fig. 5 dargestellt. Die Tragekörper 2 werden an den Ecken durch Winkelteile 30, 40 ersetzt, die jeweiligen Eckteile von Kabelkanal 3 bzw. Handlauf 6 tragen. Die Winkelteile 30, 40 sind dabei so ausgestaltet dass ein Winkelteil 30 in einer Verstellschiene 70 eines zweiten Winkelteils 40 in verschiedenen Positionen einrasten kann. Dadurch können die Winkelteile 30, 40 in verschiedenen Winkeln zueinander angeordnet werden und somit zur Überbrückung verschiedener Tunnelkanten mit verschiedenen Neigungswinkeln eingesetzt werden.

Außerdem ist ein Installationssatz für eine Handlaufinstallation mit Notbeleuchtung vorgesehen. Bei einem solchen Installationssatz handelt es sich um eine Zusammenstellung verschiedener Teile zum Aufbau einer Installation mit Funktionserhalt im Brandfall, die hinsichtlich Funktion, Materialauswahl und Abmessungen so aufeinander abgestimmt sind, dass sie eine Verstellung einer Installation der genannten Art ermöglichen. Ein derartiger Satz von Teilen wird beispielsweise auf einer Baustelle vorhanden sein, bevor mit der eigentlichen Installationsarbeit begonnen werden kann. Der Installationssatz für eine Handlaufinstallation umfasst einen Handlauf 6, einen geschlossenen Kabelkanal 3, ein Flachkabel 9, wie es beispielsweise im Zusammenhang mit den Figuren 1 und 2 beschrieben wurde. Es umfasst ferner mehrere Abzweigdosen 10 zur Kontaktierung des Flachkabels, wobei der Kabelkanal auch zur Aufnahme der Abzweigdosen vorgesehen ist. Der Installationssatz umfasst ferner diskrete Tragekörper 2 mit voneinander verschiedenen Auflageflächen für den Handlauf 6 und den Kabelkanal 3, wobei der Handlauf 6 ein vom Kabelkanal 3 gesondertes Bauteil bildet und zur Anordnung oberhalb des geschlossenen Kabelkanals 3 ausgebildet ist. Dies ist auch in Figuren 1 und 2 anschaulich gezeigt. Ferner umfasst der Installationssatz mehrere Lampen 11, zur Anordnung in Längsrichtung der Handlaufinstallation mit Notbeleuchtung 1, 1' hintereinander, wobei im Boden des Kabelkanals 3 Öffnungen 17 zum Durchstecken der Lampen 11 für Abstrahlung weg vom Kabelkanalboden ausgebildet sind. Der geschlossene Kabelkanal 3 und die Tragekörper 2 sind aus Metall hergestellt, wie weiter oben beschrieben.

Die Darstellung ist nur beispielhaft, beispielsweise können von einzelnen Teilen größere oder kleinere Stückzahlen versehen sein, oder manche Teile ganz fehlen.

## Patentansprüche

1. Handlaufinstallation mit Notbeleuchtung (1, 1') für Tunnel, umfassend:
einen Handlauf (6),
einen geschlossenen Kabelkanal (3),
mehrere Tragekörper (2),
mehrere Abzweigdosen (10),
ein in dem geschlossenen Kabelkanal verlegtes Flachkabel (9), wobei die mehreren Abzweigdosen (10) zur abisolierfreien Kontaktierung des Flachkabels dienen,
wobei die Abzweigdosen (10) das Flachkabel (9) innerhalb des geschlossenen Kabelkanals (3) kontaktieren,
wobei der Handlauf (6) und der Kabelkanal (3) auf voneinander verschiedenen Auflageflächen (7, 8) an der Oberseite von mehreren Tragekörpern (2) aufliegen, und der Handlauf (6) dabei separat von dem geschlossenen Kabelkanal (3) bzw. den Tragekörpern (2) vorgesehen ist und der Kabelkanal (3) separat von den Tragekörpern (2) vorgesehen ist, und wobei der Handlauf (6) oberhalb des geschlossenen Kabelkanals (3) angeordnet ist
wobei die Notbeleuchtung mehrere hintereinander angeordnete Lampen (11) umfasst, die an den Abzweigdosen (10) platziert sind und von diesen gespeist werden,
wobei die Lampen (11) in Richtung Tunnelboden durch Montageöffnungen (17) im Boden des Kabelkanals durchgesteckt sind sodass sie in einen Bereich unterhalb des geschlossenen Kabelkanals (3) abstrahlen,
wobei der Handlauf und der Kabelkanal durch die Tragekörper (2) horizontal entlang einer Tunnelwand geführt werden
wobei der geschlossene Kabelkanal und die Tragekörper (2) aus Metall hergestellt ist, **dadurch gekennzeichnet, dass**
die Abzweigdosen (10) um einen Kurzschluss im Bereich der Abzweigdose (10) durch Eindringen von Wasser im Bereich der Abzweigdose (10) zu verhindern, mit wasserdichten Kunststoffgehäusen versehen sind bzw. mit Dichtungen im Bereich ihrer Öffnungen ausgestattet sind, und dass
die Lampen (11) einzeln oder in Gruppen gegen Überstrom und/oder brandtypische Temperaturen abgesichert sind.

2. Handlaufinstallation nach Anspruch 1, wobei sowohl das Flachkabel (9) als auch die Abzweigdosen (10) brandfest ausgestaltet sind.

3. Handlaufinstallation mit Notbeleuchtung (1, 1') nach einem der Ansprüche 1 oder 2, wobei die Lampen (11) in ein Lampengehäuse (12) eingesetzt sind und ein Leuchtmittel (11) umfassen, wobei das Lampengehäuse (12) aus wasserdichtem Material besteht und die Lampe vor Eindringen von Staub bzw. Wasser geschützt ist.

4. Handlaufinstallation mit Notbeleuchtung (1, 1') nach Anspruch 3, wobei die Leuchtmittel (11) entweder schräg nach unten ausgerichtet sind, oder vertikal nach unten ausgerichtet sind und das von dem Leuchtmittel (11) emittierte Licht von einer Ablenkvorrichtung in Richtung schräg unten abgelenkt wird.

5. Handlaufinstallation mit Notbeleuchtung (1, 1') nach einem der Ansprüche 1 bis 4, wobei die Lampen (11) so ausgestaltet sind, dass sie den Bereich unter dem Kabelkanal (3) bzw. Handlauf (6) linienförmig ausleuchten.

6. Handlaufinstallation mit Notbeleuchtung nach Anspruch 5, wobei der Abstand zwischen zwei Lampen der Notbeleuchtung (11) zwischen 0,8 und 2 Meter beträgt.

7. Handlaufinstallation mit Notbeleuchtung (1, 1') nach einem der Ansprüche 1 bis 6, wobei die Tragekörper (2) und der Kabelkanal (3) aus massiven V2A- oder V24 Edelstahl gefertigt sind.

8. Handlaufinstallation mit Notbeleuchtung (1, 1') nach einem der Ansprüche 1 bis 7, wobei die Tragekörper (2) wenigstens eine vertikale Stütze (18) an der Auflagefläche für den Kabelkanal (8) aufweist und über die wenigstens eine vertikale Stütze (18) mittels einer Gewindestange (20) an der Wand befestigt werden kann.

9. Handlaufinstallation mit Notbeleuchtung (1, 1') nach einem der Ansprüche 1 bis 8, wobei der geschlossene Kabelkanal (3) mittels eines Deckels (5) nach oben hin verschlossen ist, wobei der geschlossene Kabelkanal (3) eine u-förmigen Kabelpritsche (4) und einen darauf aufgesetzten Deckel (5) umfasst.

10. Handlaufinstallation mit Notbeleuchtung (1, 1') nach Anspruch 9, wobei der Deckel (5) im aufgesetzten Zustand mit der u-förmigen Kabelpritsche (4) einen Labyrinthverschluss (15) des Kabelkanals bildet.

11. Handlaufinstallation mit Notbeleuchtung (1, 1') nach einem der Ansprüche 1 bis 10, wobei die Außenhülle des Flachkabels (9) bzw. das Gehäuse der Abzweigdose (10) aus einem Kunststoff gefertigt sind, der im Brandfall Kohlendioxid freisetzt, welches innerhalb des geschlossenen Kabelkanals (3) als ein Schutzgas fungiert, wobei das Kohlendioxid Sauerstoff verdrängt und selbst nicht oder nur in geringen Mengen aus dem geschlossenen Kabelkanal (3) entweicht.

12. Handlaufinstallation mit Notbeleuchtung (1, 1'), nach einem der Ansprüche 1 bis 11, wobei ein mit der Handlaufinstallation mit Notbeleuchtung (1, 1') verbundener Notfallschalter (100) vorgesehen ist, mit dem die Notbeleuchtung (1, 1') aktiviert werden kann und wobei sich die Handlaufinstallation mit Notbeleuchtung (1, 1') über die gesamte Länge eines Tunnels erstreckt und bei Querstollen, Tunnelpfeilern bzw. Kanten im Tunnelverlauf um Biegungen, Ecken und/oder Kanten der Tunnelwand (50) geführt wird.

13. Handlaufinstallation mit Notbeleuchtung (1, 1') nach einem der Ansprüche 1 bis 12, wobei der Handlauf (7) an den Auflageflächen für den Handlauf (6) der Tragekörper (2) durch Schrauben (26) fixiert ist und wobei der Kabelkanal (3) an den Auflageflächen für den Kabelkanal (8) der Tragekörper (2) durch Schrauben (26) fixiert ist.

14. Installationssatz angepasst für die Installation einer Handlaufinstallation mit Notbeleuchtung (1, 1') nach einem der Ansprüche 1 bis 13, wobei der Installationssatz folgendes umfasst:
einen Handlauf (6),
einen geschlossenen Kabelkanal (3),
ein Flachkabel (9) zur Verlegung im geschlossenen Kabelkanal (3) in dessen Längsrichtung,
mehrere Abzweigdosen (10) zur abisolierfreien Kontaktierung des Flachkabels (9), wobei
der Kabelkanal (3) auch zur Aufnahme der Abzweigdosen (10) vorgesehen ist;
diskrete Tragkörper (7) mit voneinander verschiedenen Auflageflächen für den Handlauf und den Kabelkanal (7, 8)
wobei der Handlauf (6) ein vom Kabelkanal (3) gesondertes Bauteil bildet und zur Anordnung oberhalb des geschlossenen Kabelkanals ausgebildet ist,
mehrere Lampen (11) zur Anordnung in Längsrichtung der Handlaufinstallation mit Notbeleuchtung (1, 1') hintereinander,
wobei im Boden des Kabelkanals Öffnungen (17) zum Durchstecken der Lampen (11) für Abstrahlung weg vom Kabelkanalboden ausgebildet sind,
wobei der geschlossene Kabelkanal (3) und die Tragekörper (2) aus Metall hergestellt sind.

## Claims

1. Handrail installation with emergency lighting (1, 1') for tunnels, comprising:
a handrail (6),
a closed cable duct (3),
a plurality of supporting bodies (2),
a plurality of junction boxes (10),
a ribbon cable (9) which is laid in the closed cable duct, wherein the plurality of junction boxes (10) serve to make contact with the ribbon cable without the removal of insulation, wherein the junction boxes (10) make contact with the ribbon cable (9) within the closed cable duct (3),
wherein the handrail (6) and the cable duct (3) rest on support faces (7, 8), which are different from one another, on the upper side of a plurality of supporting bodies (2), and the handrail (6) is in this context provided separately from the closed cable duct (3) and the supporting bodies (2), and the cable duct (3) is provided separately from the supporting bodies (2), and wherein the handrail (6) is arranged above the closed cable duct (3),
wherein the emergency lighting comprises a plurality of lamps (11) which are arranged one behind the other and which are positioned at the junction boxes (10) and are fed by them,
wherein the lamps (11) are plugged through in the direction of the tunnel floor through mounting openings (17) in the floor of the cable duct, so that said lamps irradiate in a region underneath the closed cable duct (3),
wherein the handrail and the cable duct are fed through the supporting bodies (2) horizontally along a tunnel wall,
wherein the closed cable duct and the supporting bodies (2) are manufactured from metal, **characterized in that**
the junction boxes (10) they are provided with watertight plastic housings or are equipped with seals in the region of their openings in order to prevent a short circuit in the region of the junction box (10) as a result of the ingress of water in the region of the junction box (10), and **in that** the lamps (11) are protected individually or in groups against overcurrents and/or temperatures which are typical of fires.

2. Handrail installation according to Claim 1, wherein both the ribbon cable (9) and the junction boxes (10) are configured to be fireproof.

3. Handrail installation with emergency lighting (1, 1') according to one of Claims 1 and 2, wherein the lamps (11) are inserted into a lamp housing (12) and comprise a lighting means (11), wherein the lamp housing (12) is composed of watertight material, and the lamp is protected against the ingress of dust or water.

4. Handrail installation with emergency lighting (1, 1') according to Claim 3, wherein the lighting means (11) are oriented either obliquely downwards or vertically downwards and the light emitted by the lighting means (11) is deflected in an obliquely downward direction by a deflection device.

5. Handrail installation with emergency lighting (1, 1') according to one of Claims 1 to 4, wherein the lamps (11) are configured in such a way that they illuminate the region under the cable duct (3) or handrail (6) in a linear form.

6. Handrail installation with emergency lighting according to Claim 5, wherein the distance between two lamps of the emergency lighting (11) is between 0.8 and 2 metres.

7. Handrail installation with emergency lighting (1, 1') according to one of Claims 1 to 6, wherein the supporting bodies (2) and the cable duct (3) are fabricated from solid V2A or V24 stainless steel.

8. Handrail installation with emergency lighting (1, 1') according to one of Claims 1 to 7, wherein the supporting bodies (2) have at least one vertical support (18) on the support face for the cable duct (8) and can be attached to the wall via the at least one vertical support (18) by means of a threaded rod (20) .

9. Handrail installation with emergency lighting (1, 1') according to one of Claims 1 to 8, wherein the closed cable duct (3) is closed off in the upward direction by means of a cover (5), wherein the closed cable duct (3) comprises a u-shaped cable rack (4) and a cover (5) which is fitted thereon.

10. Handrail installation with emergency lighting (1, 1') according to Claim 9, wherein the cover (5) forms, in the fitted-on state with the u-shaped cable rack (4), a labyrinth closure (15) of the cable duct.

11. Handrail installation with emergency lighting (1, 1') according to one of Claims 1 to 10, wherein the outer sheet of the ribbon cable (9) and/or the housing of the junction box (10) are/is fabricated from a plastic which in the event of a fire releases carbon dioxide which functions as a protective gas within the closed cable duct (3), wherein the carbon dioxide expels oxygen and itself does not escape from the closed cable duct (3), or does so only in small quantities.

12. Handrail installation with emergency lighting (1, 1') according to one of Claims 1 to 11, wherein an emergency switch (100) which is connected to the handrail installation with emergency lighting (1, 1') is provided, with which emergency switch (100) the emergency lighting (1, 1') can be activated, and wherein the handrail installation with emergency lighting (1, 1') extends over the entire length of a tunnel and when there are crossways, tunnel pillars or edges in the course of the tunnel said handrail installation with emergency lighting (1, 1') is guided around bends, corners and/or edges of the tunnel wall (50).

13. Handrail installation with emergency lighting (1, 1') according to one of Claims 1 to 12, wherein the handrail (7) is secured to the support faces for the handrail (6) of the supporting bodies (2) by means of screws (26), and wherein the cable duct (3) is secured to the support faces for the cable duct (8) of the supporting bodies (2) by means of screws (26) .

14. Installation kit adapted for the installation of a handrail installation with emergency lighting (1, 1') according to one of Claims 1 to 13, wherein the installation kit comprises the following:
a handrail (6),
a closed cable duct (3),
a ribbon cable (9) to be laid in the closed cable duct (3), in the longitudinal direction thereof,
a plurality of junction boxes (10) for making contact with the ribbon cable (9) without the removal of insulation, wherein the cable duct (3) is also provided for receiving the junction boxes (10);
discrete support bodies (7) with support faces, different from one another, for the handrail and the cable duct (7, 8),
wherein the handrail (6) forms a component which is separated from the cable duct (3) and is designed for arrangement above the closed cable duct,
a plurality of lamps (11) for arrangement one behind the other in the longitudinal direction of the handrail installation with emergency lighting (1, 1'),
wherein openings (17) for plugging through the lamps (11) for irradiation away from the floor of the cable duct are formed in the floor of the cable duct, and
wherein the closed cable duct (3) and the supporting bodies (2) are produced from metal.

## Revendications

1. Installation de main courante avec un éclairage de secours (1, 1') pour des tunnels, comprenant :
une main courante (6),
un passage de câbles (3) fermé,
plusieurs corps de support (2),
plusieurs boîtes de jonction (10),
un câble plat (9) posé dans le passage de câbles (3) fermé, dans laquelle les plusieurs boîtes de jonction (10) servent à établir un contact sans dénudage avec le câble plat,
dans laquelle les boîtes de jonction (10) établissent un contact avec le câble plat (9) à l'intérieur du passage de câbles (3) fermé,
dans laquelle la main courante (6) et le passage de câbles (3) reposent sur des surfaces d'appui (7, 8) différentes les unes des autres sur le côté supérieur de plusieurs corps de support (2), et la main courante (6) est prévue ce faisant séparément du passage de câbles (3) fermé ou des corps de support (2) et le passage de câbles (3) est prévu séparément des corps de support (2), et dans lequel la main courante (6) est disposée au-dessus du passage de câbles (3) fermé,
dans laquelle l'éclairage de secours comprend plusieurs lampes (11) disposées les unes à la suite des autres, qui sont placées sur les boîtes de jonction (10) et sont alimentées par celles-ci,
dans laquelle les lampes (11) sont enfichées en direction du sol de tunnel à travers des ouvertures de montage (17) dans le fond du passage de câbles de sorte qu'elles émettent un rayonnement dans une zone sous le passage de câbles (3) fermé,
dans laquelle la main courante et le passage de câbles sont guidés à travers les corps de support (2) de manière horizontale le long d'un mur de tunnel,
dans laquelle le passage de câbles fermé et les corps de support (2) sont fabriqués à partir de métal,
**caractérisée en ce que**
les boîtes de jonction (10) sont pourvues de boîtiers en matière plastique étanches à l'eau ou sont équipées de joints d'étanchéité dans la zone de leurs ouvertures pour empêcher un court-circuit dans la zone de la boîte de jonction (10) du fait de l'infiltration d'eau dans la zone de la boîte de jonction (10), et que
les lampes (11) sont protégées individuellement ou en groupes contre toute surintensité et/ou des températures typiques d'incendie.

2. Installation de main courante selon la revendication 1, dans laquelle à la fois le câble plat (9) et les boîtes de jonction (10) sont configurés de manière à résister au feu.

3. Installation de main courante avec un éclairage de secours (1, 1') selon l'une quelconque des revendications 1 ou 2, dans laquelle les lampes (11) sont insérées dans un boîtier de lampes (12) et comprennent un moyen lumineux (11), dans laquelle le boîtier de lampes (12) est constitué d'un matériau étanche à l'eau et la lampe est protégée contre l'infiltration de poussières ou d'eau.

4. Installation de main courante avec un éclairage de secours (1, 1') selon la revendication 3, dans laquelle les moyens lumineux (11) sont soit orientés à l'oblique vers le bas soit sont orientés de manière verticale vers le bas et la lumière émise par le moyen lumineux (11) est déviée dans une direction oblique vers le bas par un dispositif de déviation.

5. Installation de main courante avec un éclairage de secours (1, 1') selon l'une quelconque des revendications 1 à 4, dans laquelle les lampes (11) sont configurées de telle sorte qu'elles éclairent de manière linéaire la zone sous le passage de câbles (3) ou la main courante (6).

6. Installation de main courante avec un éclairage de secours selon la revendication 5, dans laquelle la distance entre deux lampes de l'éclairage de secours (11) est comprise entre 0,8 et 2 mètres.

7. Installation de main courante avec un éclairage de secours (1, 1') selon l'une quelconque des revendications 1 à 6, dans laquelle les corps de support (2) et le passage de câbles (3) sont produits à partir d'acier inoxydable massif V2A ou V24.

8. Installation de main courante avec un éclairage de secours (1, 1') selon l'une quelconque des revendications 1 à 7, dans laquelle les corps de support (2) présentent au moins un montant vertical (18) sur la surface d'appui pour le passage de câbles (8) et peuvent être fixés sur le mur au moyen d'une tige filetée (20) par l'intermédiaire de l'au moins un montant vertical (18).

9. Installation de main courante avec un éclairage de secours (1, 1') selon l'une quelconque des revendications 1 à 8, dans laquelle le passage de câbles (3) fermé est fermé vers le haut au moyen d'un couvercle (5), dans laquelle le passage de câbles (3) fermé comprend un chemin de câbles (4) en forme de u et un couvercle (5) placé sur celui-ci.

10. Installation de main courante avec un éclairage de secours (1, 1') selon la revendication 9, dans laquelle le couvercle (5) forme dans l'état placé avec le chemin de câbles (4) en forme de u une fermeture de labyrinthe (15) du passage de câbles.

11. Installation de main courante avec un éclairage de secours (1, 1') selon l'une quelconque des revendications 1 à 10, dans laquelle l'enveloppe extérieure du câble plat (9) ou le boîtier de la boîte de jonction (10) sont produits à partir d'une matière plastique, qui libère en cas d'incendie du dioxyde de carbone, lequel fait office de gaz protecteur à l'intérieur du passage de câbles (3) fermé, dans laquelle le dioxyde de carbone refoule de l'oxygène et ne s'échappe lui-même pas ou seulement en d'infimes quantités du passage de câbles (3) fermé.

12. Installation de main courante avec un éclairage de secours (1, 1') selon l'une quelconque des revendications 1 à 11, dans laquelle est prévu un commutateur d'urgence (100) relié à l'installation de main courante avec un éclairage de secours (1, 1'), avec lequel l'éclairage de secours (1, 1') peut être activé et dans laquelle l'installation de main courante avec un éclairage de secours (1, 1'), dans laquelle l'installation de main courante avec un éclairage de secours (1, 1') s'étend sur la totalité de la longueur d'un tunnel et est guidée, en cas de galeries transversales, de piliers de tunnel ou d'arêtes dans l'extension de tunnel autour de cintrages, de coins et/ou d'arêtes de la paroi de tunnel (50).

13. Installation de main courante avec un éclairage de secours (1, 1') selon l'une quelconque des revendications 1 à 12, dans laquelle la main courante (7) est fixée par des vis (26) sur les surfaces d'appui pour la main courante (6) des corps de support (2) et dans laquelle le passage de câbles (3) est fixé par des vis (26) sur les surfaces d'appui pour le passage de câbles (8) des corps de support (2).

14. Jeu d'installation adapté pour l'installation d'une installation de main courante avec un éclairage de secours (1, 1') selon l'une quelconque des revendications 1 à 13, dans lequel le jeu d'installation comprend ce qui suit :
une main courante (6),
un passage de câbles (3) fermé,
un câble plat (9) destiné à être posé dans le passage de câbles (3) fermé dans son sens longitudinal,
plusieurs boîtes de jonction (10) pour mettre en contact sans dénudage le câble plat (9), dans lequel le passage de câbles (3) est prévu également pour loger les boîtes de jonction (10) ;
des corps de support (7) discrets avec des surfaces d'appui différentes les unes des autres pour la main courante et le passage de câbles (7, 8),
dans lequel la main courante (6) forme un composant isolé du passage de câbles (3) et est réalisée pour être disposée au-dessus du passage de câbles fermé,
plusieurs lampes (11) destinées à être agencées dans le sens longitudinal de l'installation de main courante avec un éclairage de secours (1, 1') les unes à la suite des autres,
dans lequel des ouvertures (17) servant à enficher les lampes (11) pour l'émission de rayonnement en s'éloignant du fond de passage de câbles sont réalisées dans le fond du passage de câbles,
dans lequel le passage de câbles (3) fermé et les corps de support (2) sont fabriqués à partir de métal.
